## Europäisches Patentamt

## European Patent Office

## Office européen des brevets

(11) Veröffentlichungsnummer: **0 108 094**

**B1**

(12) # EUROPÄISCHE PATENTSCHRIFT

(45) Veröffentlichungstag der Patentschrift:
14.10.87

(51) Int. Cl.⁴: **G 01 S 3/10,** G 01 S 3/14,
H 01 Q 25/02, G 01 S 3/32

(21) Anmeldenummer: **83901363.8**

(22) Anmeldetag: **28.04.83**

(86) Internationale Anmeldenummer:
**PCT/DE 83/00077**

(87) Internationale Veröffentlichungsnummer:
**WO 83/03904 (10.11.83 Gazette 83/26)**

(54) **PEILANORDNUNG.**

(30) Priorität: 29.04.82 DE 3215964
02.07.82 DE 3224722
13.08.82 DE 3230148
22.03.83 DE 3310291

(43) Veröffentlichungstag der Anmeldung:
16.05.84 Patentblatt 84/20

(45) Bekanntmachung des Hinweises auf die Patenterteilung:
14.10.87 Patentblatt 87/42

(84) Benannte Vertragsstaaten:
**DE FR GB**

(56) Entgegenhaltungen:
**DE-A-2 849 331
FR-A-2 203 082
US-A-2 361 436
US-A-2 576 150
US-A-3 396 395
US-A-3 623 116
US-A-4 207 572**

**IRE Transactions on Antennas and Propagation,
November 1962, volume 10, New York (US). G.
Evans: "The Crossed-Space-Loop-Direction-Finder
Aerial", pages 689-691**

(73) Patentinhaber: **Licentia Patent- Verwaltungs- GmbH,
Theodor- Stern- Kai 1, D-6000 Frankfurt/Main 70
(DE)**

(72) Erfinder: **MÖNICH, Gerhard, Dornierstrasse 1,
D-7910 Neu- Ulm (DE)**
Erfinder: **UHLMANN, Manfred, Eichenhang 25,
D-7900 Ulm (DE)**

(74) Vertreter: **Schulze, Harald Rudolf, Dipl.- Ing.,
Licentia Patent- Verwaltungs- GmbH Theodor-
Stern- Kai 1, D-6000 Frankfurt/Main 70 (DE)**

**Beschreibung**

Die Erfindung betrifft eine Peilanordnung zur Ermittlung der Einfallsrichtung einer elektromagnetischen Welle auf Schiffen.

Die Peilung elektromagnetischer Wellen ist auf Schiffen besonders erschwert durch die in geringer Entfernung von den Peilantennen befindlichen metallischen Schiffsaufbauten und Masten. Gebräuchliche Peilanordnungen, wie z. B. gekreuzte Adcocks oder Kreuzrahmenantennen liefern auf Schiffen stark verfälschte Peilergebnisse. Die Peilfehler sind dabei stark abhängig von Frequenz und Einfallsrichtung der gepeilten Welle und besonders ausgeprägt für quer zur Schiffslängsachse einfallende Wellen, für welche die Peilergebnisse sogar mehrdeutig werden können. In "IRE Transactions on Antennas and Propagation", Nov. 1962, S. 686 bis 691, ist ein Peilantennensystem zur Verringerung der Peilfehler auf Schiffen beschrieben, welches zwei feststehende, unter 45° gekreuzte Doppelrahmenantennen aufweist. Für jeden Doppelrahmen wird aus den beiden Einzelrahmenantennen eine Summen- und eine Differenzspannung gewonnen. Durch Amplitudenvergleich der beiden Differenzspannungen wird ein allerdings noch vierdeutiger Peilwinkel gewonnen. Die Eindeutigkeit der Peilung kann erzielt werden, indem für einen oder beide Doppelrahmen ein Vorzeichen-Vergleich zwischen der Summen-und der Differenzspannung durchgeführt wird.

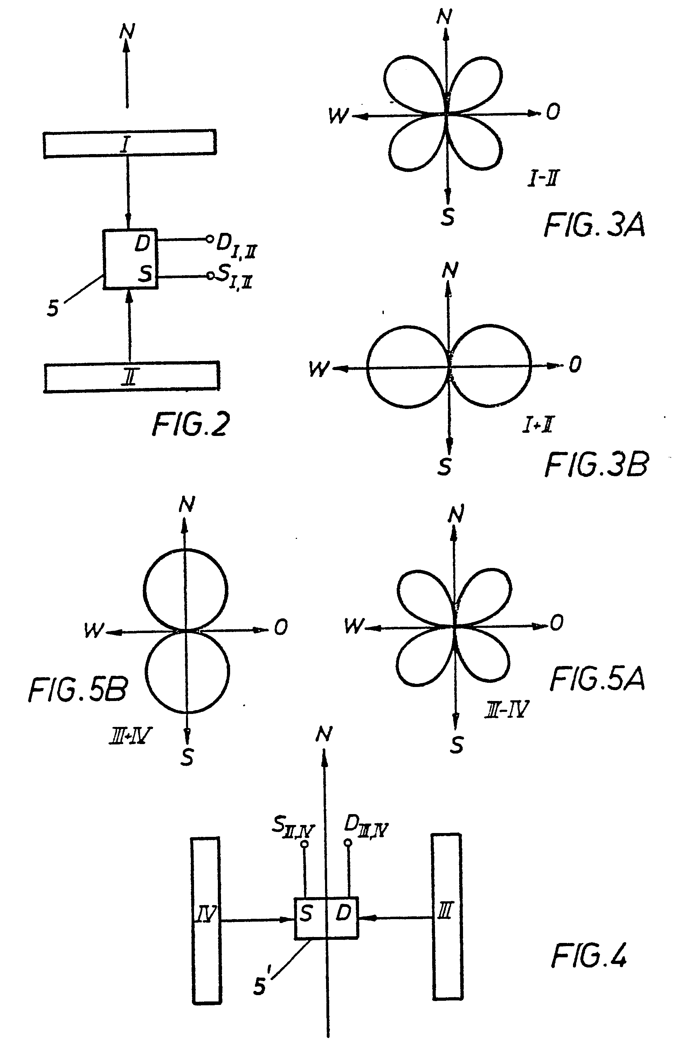

In Zusammenhang mit der dortigen Fig. 4(a), in welcher die der Summen- und der Differenzspannung eines einzelnen Doppelrahmens entsprechenden Diagramme abgebildet sind, ist angegeben, daß durch Vergleich der Summen- und Differenzspannung eine Festlegung des Quadranten, in dem die elektromagnetische Welle einfällt, möglich ist.

Der Erfindung liegt die Aufgabe zugrunde, eine Peilanordnung auf Schiffen anzugeben, welche eine Verringerung der Peilfehler ermöglicht.

Die Erfindung ist im Patentanspruch 1 beschrieben. Die Unteransprüche enthalten vorteilhafte Ausgestaltungen und Weiterbildungen der Erfindung.

Durch die Ausrichtung der Verbindungslinie der beiden Rahmenantennen des Doppelrahmens parallel zur Schiffslängsachse liegen auch die Nullstellen der Diagramme der beiden Rahmenantennen parallel zur Schiffslängsachse, so daß bereits die Antennenspannungen der Einzelantennen weitgehend frei sind von Störungen, die von in der Nähe der Schiffslängsachse befindlichen Rückstreuern herrühren.

Damit enthält also auch die aus diesen Antennenspannungen abgeleitete Summen-und Differenzspannung, aus deren Amplitudenverhältnis der Peilwinkel bestimmt wird, keine solchen Störungen.

Das Ausblenden von aus beliebiger Richtung einfallenden unerwünschten Signalen ist an sich durch Ausblendeempfangsanlagen bekannt, bei welchen ein Richtdiagramm mit mindestens einer Nullstelle im Azimut schwenkbar ist, indem die Antenne oder ein diagrammformendes Goniometer gedreht wird. Die Nullstelle des Diagramms wird beim Auftreten z. B. eines Störsenders auf diesen ausgerichtet, so daß Signale aus anderen Richtungen weiter im wesentlichen ungestört empfangen werden können. Durch Zusammenschalten mehrerer Antennen oder Antennengruppen mit gleich ausgerichtetem Richtdiagramm zu einer Peilanordnung, wie in der US-A-25 76 150 beschrieben,kann die Empfangsanlage zu einer Peilanlage erweitert werden. Die Erfindung ist nachfolgend unter Bezugnahme auf die Abbildungen noch veranschaulicht. Dabei zeigt

FIG. 1 eine Störsituation auf einem Schiff

FIG. 2 eine Doppelrahmenanordnung

FIG. 3A und FIG. 3B die mit dieser Doppelrahmenanordnung erzielten Richtdiagramme

FIG. 4 eine zweite Doppelrahmenanordnung

FIG. 5A und FIG. 5B die zugehörigen Richtdiagramme

FIG. 6 die prinzipielle Anordnung für die Peilauswertung

Fig. 7 eine Gegenüberstellung der zum Pegelvergleich verwendeten Richtdiagramme

FIG. 8 die Ausführung eines Kreuzrahmenpeilers.

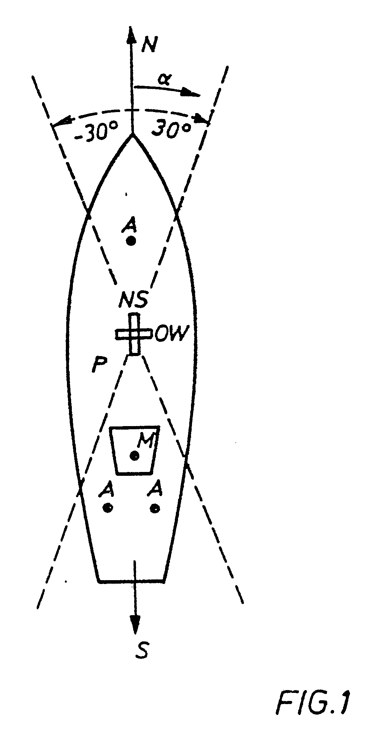

Die Längsachse des in FIG. 1 skizzierten Schiffskörpers sei nach Norden ausgerichtet. Die Peilantenne P ist annähernd in Schiffsmitte angeordnet. In der Längsachse des Schiffes befinden sich noch eine weitere Antenne A und ein Mast M sowie symmetrisch zur Schiffsachse im Heck zwei weitere Antennen A. Die Antennen und der Mast stellen starke Rückstreuer dar, die eine Peilung einer in einem Sektor von z. B. $\pm 30°$ Abweichung von der Schiffslängsachse einfallenden Welle immer mit einem gewissen, tragbaren Fehler beaufschlagen. Mit herkömmlichen Schiffspeilern sind aber besonders Peilungen, die einen Azimutwinkel außerhalb dieses Bereichs ergeben, mit einem starken Fehler behaftet, da das rückgestreute Feld im allgemeinen zumindest eine der beiden für die Peilung herangezogenen Spannung OW oder NS stark verfälscht. In diesem Bereich bringt die vorliegende Erfindung eine erhebliche Verringerung des Peilfehlers.

In FIG. 2 ist die Doppelrahmen-Antennenanordnung gemäß einem Merkmal der Erfindung skizziert. Die beiden Einzelrahmen I, II weisen bareits jeder für sich ein Diagramm mit einer Nullstelle in Nord/Süd-Richtung ( = Schiffslängsachse) auf. Eine Kombination der beiden Diagramme durch additive Überlagerung der Antennenspannungen der beiden Rahmen I und II zu einer Summenspannung $S_{I, II}$ ergibt damit wiederum ein Diagramm mit einer Nullstelle nach Norden und Süden. Die Form dieses Diagramms ist in FIG. 3B skizziert. Damit liegt bereits eine Peilspannung vor, die dem Empfang über ein Richtdiagramm mit einer Nullstelle in Richtung der störenden Rückstreuer entspricht. Gleichzeitig zu der Summenspannung $S_{I, II}$ wird aus den Antennenspannungen der beiden Rahmen I und II auch die Differenzspannung $D_{I, II}$ durch Subtraktion der beiden Antennenspannungen gebildet. Die Subtraktion der beiden Spannungen entspricht der Überlagerung der beiden Diagramme zu einem neuen Diagramm, wie es in FIG. 3a skizziert ist, das sowohl in Nord/Süd-Richtung als auch in Ost/West-Richtung Nullstellen aufweist. Mit der Differenzspannung $D_{I, II}$ liegt eine zweite Peilspannung vor, die dem Empfang über ein Diagramm entspricht, das in Richtung der störenden Rückstreuer eine Nullstelle aufweist und im übrigen Bereich von dem Verlauf des Diagramms nach FIG. 3B abweicht. Das Amplitudenverhältnis von Differenzspannung und Summenspannung ist abhängig vom Einfallswinkel der gepeilten Welle, so daß durch Bildung des Amplitudenverhältnisses auf den Einfallswinkel rückgeschlossen werden kann.

Diese vorstehend beschriebene Anordnung läßt sich günstigerweise durch einen zweiten Doppelrahmen mit Rahmenantennen III, IV zu einer gekreuzten Peilantenne erweitern. Durch Zusammenschaltung der beiden Doppelrahmen zu einer gekreuzten Peilantenne läßt sich in dem Winkelbereich in der Nähe der Schiffslängsachse, wo die Peilung mit der vorstehend beschriebenen Auswertung der Summen-und Differenzspannungen des ersten Rahmens aufgrund der geringen Empfindlichkeit in diesem Bereich schwierig ist, eine Peilung in üblicher Weise durchführen. Für die Peilung in diesem Winkelbereich funktioniert die gekreuzte Antenne im Rahmen der durch die Störer bedingten physikalischen Grenzen erfahrungsgemäß recht gut.

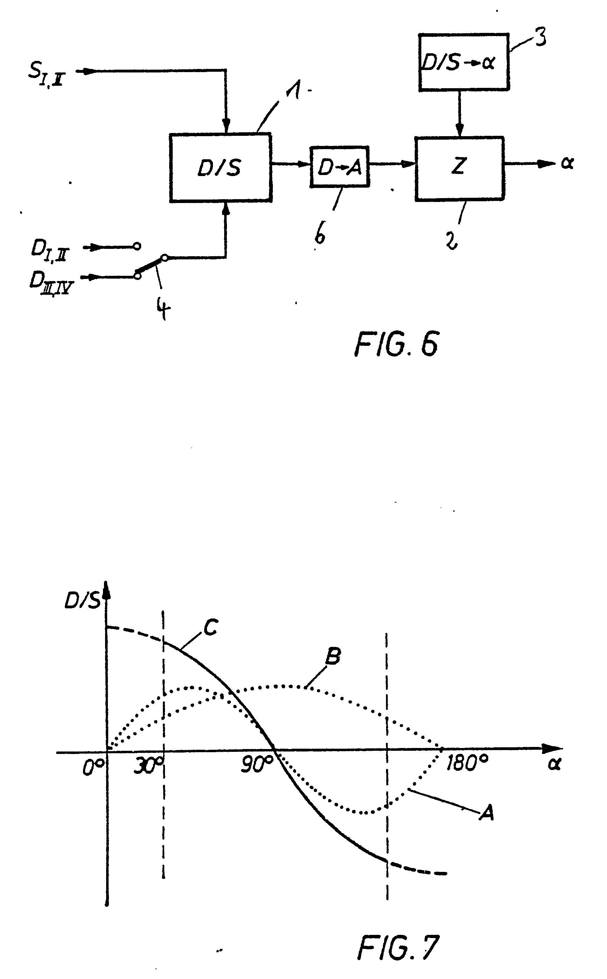

Gemäß einer vorteilhaften Weiterbildung der Erfindung werden auch die Antennenspannungen der Rahmenantennen III, IV des zweiten Doppelrahmens voneinander subtrahiert. Dies entspricht einer Überlagerung zweier Einzelrahmen-Diagramme zu einem Diagramm, wie es in FIG. 5A skizziert ist, das wiederum eine Nullstelle in Nord/Süd-Richtung aufweist und im übrigen von dem Diagramm des ersten Doppelrahmens nach FIG. 3B verschieden ist. Alternativ zu dem Diagramm nach FIG. 3A kann daher auch das Diagramm nach FIG. 5A mit dem Diagramm nach FIG. 3B verglichen werden. Die eine der beiden Peilspannungen, die dem Komparator 1 (siehe Fig. 6) zugefürt werden, ist also in beiden Fällen die Summenspannung $S_{I, II}$ des ersten Doppelrahmens, während die andere der beiden Peilspannungen entweder die Differenzspannung $D_{I, II}$ des ersten Doppelrahmens oder die Differenzspannung $D_{III, IV}$ des zweiten Doppelrahmens ist. Vorteilhafterweise ist über Schaltmittel 4 (Fig. 6) wahlweise eine der beiden Differenzspannungen an den einen Eingang des Komparators 1 anschließbar. Die Diagramme entsprechend den Differenzspannungen des ersten und des zweiten Doppelrahmens sind in der Realität nicht vollständig gleich, so daß in der jeweiligen Peilsituation der Empfang über das eine oder das andere dieser beiden Diagramme günstiger sein kann. Am anderen Eingang des Komparators liegt unverändert die Summenspannung $S_{I, II}$ des ersten Doppelrahmens.

Die Bildung der Differenzspannung aus den Antennenspannungen der Rahmenantennen eines Doppelrahmens ist an sich bekannt und beispielsweise in der DE-PS 711 826 beschrieben. Besonders vorteilhaft für die Differenzbildung ist die Verwndung von Summe-Differenz-Gliedern, die in umgekehrter Signalrichtung als Leistungsteiler funktionieren, da hierbei Summen- und Differenzspannung auf einfache Weise gleichzeitig gebildet werden und die einzelnen Anschlußtore voneinander entkoppelt sind.

Eine günstige Ausführungsform sieht vor, die Rahmenantennen über Transformatoren an die Summe-Differenz-Glieder anzuschließen. Dadurch ergibt sich die vorteilhafte Möglichkeit, durch Aufwärts-Transformieren der Antennenspannungen die Empfindlichkeit der Rahmenantennen bei tiefen Frequenzen zu verbessern und die starke Frequenzabhängigkeit der Rahmenantennen durch das gegenläufige Frequenzverhalten der Transformatoren in gewissem Umfang auszugleichen.

FIG. 6 zeigt die prinzipielle Anordnung zur Peilauswertung nach der vorliegenden Erfindung unter Zugrundelegung der besonders vorteilhaften Ausführungsformen mit zwei gekreuzten Doppelrahmen. Der Komparator 1 bildet aus der an seinem einen Eingang liegenden Differenzspannung D und der am anderen Eingang liegenden Summenspannung S das Spannungsverhältnis D/S. Die Differenzspannung ist wahlweise die Spannung $D_{I, II}$ des ersten Doppelrahmens oder die Spannung $D_{III, IV}$ des zweiten Doppelrahmens, die durch die Schaltmittel 4 alternativ angeschlossen werden können. Das Spannungsverhältnis D/S wird im Digital/Analog-Wandler 6 digitalisiert und der Zuordnungseinrichtung 2 zugeführt. Die Zuordnungseinrichtung ruft aus einem Lesespeicher 3 die für die Verwendung der ersten und zweiten Differenzspannung getrennt abgelegte Winkelzuordnung gegebenenfalls in Abhängigkeit der Empfangsfrequenz ab und gibt den ermittelten Peilwinkel aus.

Insbesondere bei Abhängigkeit der Winkelzuordnung zu dem bestimmten Spannungsverhältnis von der Frequenz ist auch eine Ausführungsform vorteilhaft, bei der die Zuordnungseinrichtung 2 eine Rechenschaltung aufweist, die aus dem Spannungsverhältnis und der Frequenzinformation nach einer gespeicherten Rechenvorschrift den Peilwinkel ermittelt und ausgibt.

FIG. 7 zeigt den prinzipiellen Verlauf der Richtdiagramme nach FIG. 3A bzw. 5A (Kurve A) einerseits und den des Diagramms nach FIG. 3B (Kurve B) andererseits sowie den sich daraus ergebenden Verlauf des Spannungsverhältnisses D/S (Kurve C) über den Peilwinkel α von 0 - 180°. Die Kurve verläuft spiegelbildlich für den Bereich von 0 - 180˙. Die sich daraus ergebende Doppeldeutigkeit kann, wie bereirs angefürt, durch eine Hilfsantennenspannung beseirigt werden.

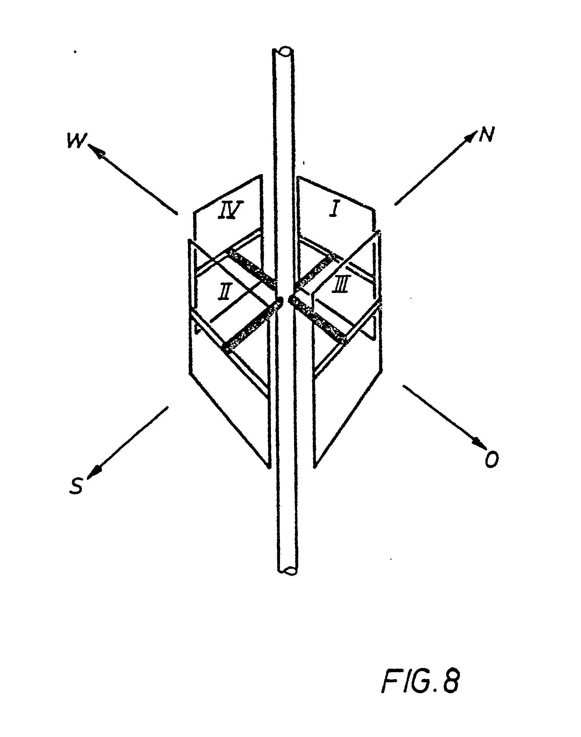

FIG. 8 zeigt die Antennenanordnung in der besonders vorteilhaften Ausführungsform mit vier Rahmenantennen um einen Mast, die auch vom Watson-Watt-Prinzip her schon bekannt ist. Die Erfindung ermöglicht es also, mit einer besonders einfachen Antennenanordnung, die zudem auch noch für die Peilung nach dem gebräuchlichen Watson-Watt- Prinzip erlaubt, eine wesentliche Verbesserung des Peilfehlers über einen weiten Winkelbereich zu erzielen.

## Patentansprüche

1. Peilanordnung zur Ermittlung der Einfallsrichtung einer elektromagnetischen Welle auf einem Schiff, mit
- einer Doppelrahmen-Antennenanordnung aus zwei Rahmenantennen (I, II), die parallel zueinander ausgerichtet sind und die sich in einem vorgegebenen Abstand gegenüberliegen,
- Einrichtungen (5) zur Zusammenfassung der Antennenspannungen der beiden Rahmentantennen zu einer Summenspannung und einer Differenzspannung,
- einem Komparator (1) zum Vergleich der Differenzspannung mit der Summenspannung, dadurch gekennzeichnet, daß
- die beiden Rahmenantennen (I, II) feststehend montiert sind und jeweils senkrecht bezüglich der Schiffslängsachse ausgerichtet sind, so daß jeweils eine Nullstelle des der Summenspannung und des der Differenzspannung zugeordneten Richtdiagramms der Doppelrahmen-Antennenanordnung permanent auf der Schiffslängsachse liegt,
- der Komparator (1) zur Bildung des Verhältnisses der Amplituden der Differenz- und der Summenspannung ausgebildet ist,
- eine Zuordnungseinrichtung (2, 3) vorgesehen ist, welche die zu dem jeweils vom Komparator gelieferten Amplitudenverhältnis gehörende Einfallsrichtung der Strahlung ermittelt und ausgibt.
2. Peilanordnung nach Anspruch 1, dadurch gekennzeichnet, daß die Zuordnungseinrichtung eine Rechenschaltung enthält mit einer gespeicherten Rechenvorschrift, die, gegebenenfalls in Abhängigkeit von der Empfangsfrequenz, für ein bestimmtes Amplitudenverhältnis die Einfallsrichtung festlegt.
3. Peilanordnung nach Anspruch 1 oder 2, dadurch gekennzeichnet, daß das Verhältnis der Amplituden der Summen- und der Differenzspannung digitalisiert wird.
4. Peilanordnung nach Anspruch 3, dadurch gekennzeichnet, daß die Zuordnungseinrichtung einen Lesespeicher (3) enthält, in dem die Zuordnung von Amplitudenverhältnis zu Einfallsrichtung gegebenenfalls in Abhängigkeit von der Empfangsfrequenz, gespeichert ist.
5. Peilanordnung nach einem der Ansprüche 1 bis 4, dadurch gekennzeichnet, daß ein zweiter Doppelrahmen vorhanden ist, dessen beide Rahmenantennen (III, IV) senkrecht zu den Rahmenantennen (I, II) des ersten Doppelrahmens ausgerichtet sind, und daß die Antennenspannungen der beiden Rahmenantennen dieses zweiten Doppelrahmens gleichfalls zu einer weiteren Summenspannung und einer weiteren Differenzspannung zusammengefaßt sind.
6. Peilanordnung nach Anspruch 5, dadurch gekennzeichnet, daß Schaltmittel (4) vorgesehen sind, über die wahlweise entweder die Differenzspannung (D$_{I, II}$) des ersten Doppelrahmens oder die Differenzspannung (D$_{III, IV}$) des zweiten Doppelrahmens an einen Eingang des Komparators, an dessen anderem Eingang die Summenspannung (S$_{I, II}$) des ersten Doppelrahmens anliegt, angeschlossen werden kann.
7. Peilanordnung nach einem der Ansprüche 1- 6, dadurch gekennzeichnet, daß die Rahmenantennen jeweils über Transformatoren mit den Eingängen von Summe-Differenz-Gliedern verbunden sind.
8. Peilanordnung nach eindem der Ansprüche 1 bis 7, dadurch gekennzeichnet, daß zur seiteneindeutigen Ermittlung des Peilwinkels eine Hilfsantennenspannung vorhanden ist.

## Claims

1. Direction-finding arrangement, for determining the direction of incidence of an electromagnetic wave on a ship, with
- a double-frame aerial arrangement of two frame aerials (I, II), which are oriented each parallelly to the other and lie each opposite the other at a given spacing,
- equipments (5) for the combination of the aerial voltages of both the frame aerials into a sum voltage and a difference voltage and
- a comparator (1) for the comparison of the difference voltage with the sum voltage, characterised thereby, that
- both the frame aerials (I, II) are mounted stationarily and each oriented perpendicularly with respect to the longitudinal axis of the ship so that a null point of the directional pattern, which is associated with each of the sum voltage and the difference voltage, of the double-frame aerial arrangement lies permanently on the longitudinal axis of the ship,
- the comparator (1) is constructed for the formation of the ratio of the amplitudes of the difference voltage and the sum voltage, and

- a correlating equipment (2, 5) is provided which determines and puts out that direction of incidence of the radiation, which belongs to the amplitude ratio respectively supplied by the comparator.

2. Direction-finding arrangement according to claim 1, characterised thereby, that the correlating equipment contains an arithmetic circuit with a stored arithmetic rule which, in a given case in dependence on the received frequency, fixes the direction of incidence for a certain amplitude ratio.

3. Direction-finding arrangement according to claim 1 or 2, characterised thereby, that the ratio of the sum voltage and the difference voltage is digitalised.

4. Direction-finding arrangement according to claim 3, characterised thereby, that the correlating equipment contains a read-out store (3), in which the correlation of amplitude ratio with direction of incidence, in a given case in dependence on the received frequency, is stored.

5. Direction-finding arrangement according to one of the claims 1 to 4, characterised thereby, that a second double-frame is present, both frame aerials (III, IV) of which are oriented perpendicularly to the frame aerials (I, II) of the first double-frame and that the aerial voltages of both the frame aerials of this second double-frame are likewise combined into a further sum voltage and a further difference voltage.

6. Direction-finding arrangement according to claim 5, characterised thereby, that switching means (4) are provided, by way of which selectably either the difference voltage ($D_{I, II}$) of the first double-frame or the difference voltage ($D_{III, IV}$) of the second double-frame can be connected to an input of the comparator, at the other input of which the sum voltage ($S_{I, II}$) of the first double-frame is present.

7. Direction-finding arrangement according to one of the claims 1 to 6, characterised thereby, that the frame aerials are each connected by way of respective transformers with the inputs of sum-difference members.

8. Direction-finding arrangement according to one of the claims 1 to 7, characterised thereby, that an auxiliary aerial voltage is present for the laterally unambiguous determination of the found bearing angle.

**Revendications**

1. Dispositif radiogoniométrique pour déterminer la direction d'incidence d'une onde électromagnétique à bord d'un navire, comprenant

- un dispositif d'antenne à double cadre, formé de deux antennes à cadre (I, II) qui sont orientées parallèlement entre elles et sont disposées face à face à une distance préfixée l'une de l'autre,

- des dispositifs (5) pour réunir les tensions d'antenne des deux antennes à cadre en une tension de somme et une tension de différence et

- un comparateur (1) pour comparer la tension de différence avec la tension de somme, caractérisé en ce que

- les deux antennes à cadre (I, II) sont montées fixes et sont orientées chacune perpendiculairement à l'axe longitudinal du navire, de manière qu'un point zéro du diagramme directionnel coordonné à la tension de somme et un point zéro du diagramme directionnel coordonné à la tension de différence du dispositif d'antenne à double cadre soient situés en permanence sur l'axe longitudinal du navire,

- le comparateur (1) est conçu pour former le rapport des amplitudes de la tension de différence et de la tension de somme et

- un dispositif de coordination (2, 3) est prévu pour déterminer et délivrer la direction d'incidence du rayonnement correspondant au rapport d'amplitudes fourni chaque fois par le comparateur.

2. Dispositif selon la revendication 1, caractérisé en ce que le dispositif de coordination contient un circuit arithmétique qui travaille selon une prescription de calcul mémorisée qui fixe, éventuellement en fonction de la fréquence de réception, la direction d'incidence pour un rapport d'amplitudes déterminé.

3. Dispositif selon la revendication 1 ou 2, caractérisé en ce que le rapport des amplitudes de la tension de somme et de la tension de différence est numérisé.

4. Dispositif selon la revendication 3, caractérisé en ce que le dispositif de coordination contient une mémoire morte (3) dans laquelle est mémorisée la coordination du rapport d'amplitudes à la direction d'incidence, éventuellement en fonction de la fréquence de réception.

5. Dispositif selon une des revendications 1 à 4, caractérisé en ce qu'il comporte un second double cadre dont les deux antennes à cadre (II, IV) sont orientées perpendiculairement aux antennes à cadre (I, II) du premier double cadre et que les tensions d'antenne des deux antennes à cadre de ce second double cadre sont également réunies en une tension de somme supplémentaire et une tension de différence supplémentaire.

6. Dispositif selon la revendication 5, caractérisé en ce que des moyens de commutation (4) sont prévus pour appliquer sélectivement la tension de différence ($D_{I, II}$) du premier double cadre ou la tension de différence ($D_{III, IV}$) du second double cadre à une entrée du comparateur, à l'autre entrée duquel est appliquée la tension de somme ($S_{I, II}$) du premier double cadre.

7. Dispositif selon une des revendications 1 à 6, caractérisé en ce que les antennes à cadre sont connectées à travers des transformateurs correspondants aux entrées d'éléments de somme-différence.

8. Dispositif selon une des revendications 1 à 7, caractérisé en ce qu'une tension d'antenne auxiliaire est prévue pour la détermination univoque de l'angle de relèvement quant au côté où se trouve cet angle.

FIG.1

FIG.2

FIG.3A

I-II

FIG.3B

I+II

FIG.5B

III+IV

FIG.5A

III-IV

FIG.4

FIG. 6

FIG.7

*FIG.8*